# EUROPEAN PATENT APPLICATION

(11) **EP 1 179 856 A1**
(43) Date of publication of application: **13.02.2002**
(21) Application number: 00202786.0
(22) Date of filing: 07.08.2000
(51) Int. Cl.: H01L 31/04, F23C 3/00, F23L 15/04

(54) **An improved thermophotovoltaic apparatus**

(71) Applicant: ABB Research Ltd., 8050 Zürich (CH)
(72) Inventor: Malfa, Enrico, 24059 Zanica (BG) (IT); Nappini, Francesca, 20052 Monza (MI) (IT)
(74) Representative: Giavarini, Francesco

(57) **Abstract**

A TPV apparatus for generating electric power, which comprises a combustion chamber comprising a burner device generating, by means of the combustion of fuel and combustion air, hot gases providing an amount of thermal power. The TPV apparatus further comprises a converter assembly, which is associated to the combustion chamber and converts into electric power at least a portion of the amount of thermal power.
The converter assembly comprises a plurality of TPV modules, positioned internally to the combustion chamber.

## Description

The present invention relates to an improved thermophotovoltaic (TPV) apparatus.

More particularly, the present invention relates to an improved TPV apparatus, which is suitable for the use in systems for the generation of electric power.

It is known that systems for the distributed generation of electric power have had a large diffusion in the market, in the last years. Distributed generation (DG) systems are mainly aimed at generating electric power in the proximity of the final user, avoiding the need of an electric power distribution network.

Distributed generation of electric power is generally adopted also in combined-heat-power (CHP) systems and in combined-heat-cold-power (CHCP) systems, which refer to the simultaneous production of electric power, hot water and steam for heating or cooling purposes.

A wide range of electric power may be covered: from few hundreds watts (domestic applications) to several megawatts (huge industrial plants), depending on the needs.

In the past, there have been, in the field of the distributed generation, different types of electric power generation methods, which employ generally internal combustion engines (ICE) or turbo-machines.

These traditional methods have some disadvantages, which are mainly related to the fact of using apparatuses, provided with moving parts and, therefore, subjected to wear problems, high noise levels, frequent maintenance interventions and the like.

Beside these traditional methods, some alternative methods, which imply a "static" generation of electric power, have been developed. Among these, the methods, which use a solar photovoltaic (PV) conversion for generating electric power, have to be mentioned. Solar photovoltaic converters are extensively used in low-medium scale electric power distributed generation systems. Thanks to absence of moving parts, they allow overcoming most of the disadvantages that are proper of the methods employing ICE or turbo-machines.

Similarly to the PV conversion, also to the TPV electric power conversion avoids the use of moving parts within an electric power generator. In fact, TPV electric power generation is based upon the positioning semiconductor TPV cells, which are structured similarly to the well known solar cells, in the photon flux field of a high temperature photon emitter. In practice, TPV electric power generation is based on the conversion of infrared (IR) radiation, which is emitted by a heat source. The development of emitters, able to emit a narrow-band IR radiation, and the adoption of TPV cells made of selected semiconductor compounds, such as those of the III-V families (Ge, GaAs, GaSb, InGaSb, InGaAsSb and the like), have allowed reaching high power density levels (higher than 1W/cm²). Therefore, TPV electric power generation has shown to be attractive for the relatively reduced size, installation and maintenance costs of the TPV generation apparatuses, keeping unchanged, at the same time, the advantages that are proper of the PV technology.

Several TPV apparatuses have therefore been developed in the state of the art.

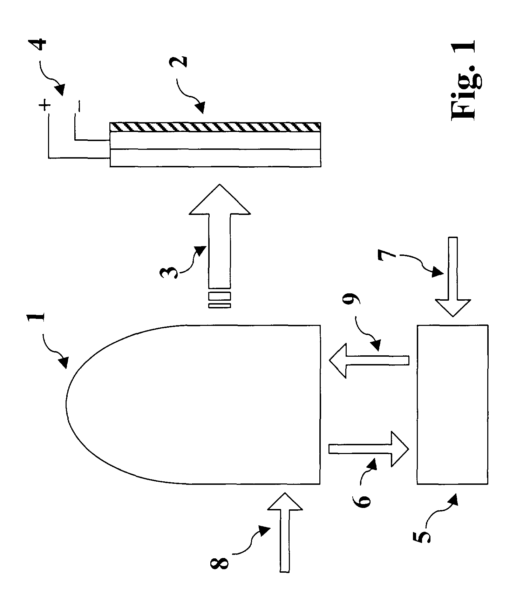

Traditionally, TPV apparatuses adopt a configuration, which is similar to that one illustrated in figure 1. In fact, because the emission spectrum of a free flame does not match with the receiving band of the conversion semiconductor cells, an emitter body 1 generally constitutes the heat source. The emitter 1 has generally a cylindrical structure, similar to the radiant tubes that are traditionally used in industrial kiln-drying systems. The emitter 1 is associated to a burner (not illustrated), which is supplied with fuel 8 and combustion air 7. The combustion process obviously provokes the emission of heat from the burner. The generated heat increases the temperature of the emitter 1, which emits externally IR photons 3. The IR radiation 3 is converted by the semiconductor cell arrays 2 into electric power 4. A recuperator 5 is generally associated to the burner. The recuperator 5 recovers the residual heat of the flue gases 6 in order to increase the whole efficiency of the conversion system. In fact, by means of heat exchangers, it is possible to pre-heat the air, which is used for the combustion (the pre-heated air flux is represented by arrow 9).

Unfortunately, traditional TPV systems are affected by some drawbacks.

Known TPV apparatuses are affected by some drawbacks that, in practice, restrict the maximum amount of electric power, which can be generated.

In fact, the high emissivity materials (e.g. SiC or Kanthal), which are generally adopted for fabricating the emitter, can be subjected to a maximum temperature, which is 1300 °C. Therefore, an intrinsic limitation of the maximum power density, which can be obtained from a single TPV conversion module of the known type, is present.

Moreover, the practice has shown that surrounding the burner with emitter, due to the cylindrical geometry of the assembly, it is very difficult to achieve a uniform temperature distribution of the emitter. This reduces the available power density of the TPV apparatus.

A further limitation of the generated electric power is represented by the limitations to the maximum size of the radiant tube 1, due to the need of obtaining a uniform temperature distribution. Actually, the maximum sized radiant tube, which is available in the state of the art, has a diameter of 195 mm and a length of 2000 mm.

Therefore, the TPV apparatuses of state of the art are generally aimed at generating electric power amounts that are lower than 1 KWe.

This fact means that they can be used only for domestic or low power distributed generation systems. The use in more powerful distributed generation systems, implies to adopt a plurality of TPV apparatuses, each adopting a configuration similar to that one illustrated in figure 1. Obviously this fact means a remarkable increase of the installation and of operation costs, which make the TPV technology no more competitive for distributed generation systems for electric power values higher than 1 KWe.

Therefore, the main aim of the present invention is to provide a TPV apparatus, which can generate a relatively high amount of electric power, at competitive costs.

Within this aim, another object of the present invention is to provide a TPV apparatus, which is suitable for the use in distributed generation systems characterised by power levels higher than 1 KWe.

Another object of the present invention is to provide a TPV apparatus, which is suitable for the use in DG, CHP and CHCP systems characterised by electric power levels higher than 1 KWe.

Another object of the present invention is to provide a TPV apparatus, which is characterised by high levels of total efficiency.

Another object of the present invention is to provide a TPV apparatus, which is characterised by relatively low installation and operation costs.

Not the least object of the present invention is to provide a TPV apparatus, the fabrication of which is relatively easy and at low costs.

Thus, the present invention provides a TPV apparatus for generating electric power comprising:
- a combustion chamber comprising a burner device, said burner device generating, by means of the combustion of fuel and combustion air, hot gases providing an amount of thermal power; and
- a converter assembly, said converter assembly being associated to said combustion chamber and converting into electric power at least a portion of said amount of thermal power.

The TPV apparatus, according to the present invention is characterised in that said converter assembly comprises a plurality of TPV modules, said TPV modules being positioned internally to said combustion chamber. At least one of said TPV modules comprises:
- an emitter element, said emitter element emitting IR radiation, when heated by said hot gases generated by said burner device; and
- a receiver element, said receiver element comprising a plurality of TPV cells for converting at least a portion the IR radiation, which is provided by said emitter element into electric power.

The TPV apparatus, according to the present invention, is particularly advantageous and allows achieving the main aim of the present invention.

In fact, in the TPV apparatus, according to the present invention, it is possible to associate a single heat source to a plurality of TPV modules. The TPV modules can be provided with an emitter element, which is heated by the single heat source and with a receiver element, which generate a predefined amount of electric power.

Therefore, the total amount of electric power, which can be provided by the whole TPV apparatus, can be regulated and increased, depending on the number of TPV modules that are positioned inside the combustion chamber. Moreover, the use of a single combustion chamber allows reducing remarkably the size of the TPV apparatus. This obviously leads to a consistent reduction of the installation and operation costs of the TPV apparatus.

For a better understanding of the present invention, reference may be made to the detailed description reported hereinafter, taken in conjunction with the accompanying drawings in which:
figure 1 represents schematically the structure of a known TPV apparatus;
figure 2 represents schematically the basic structure of the TPV apparatus according to the present invention;
figure 3 represents schematically a detail of the basic structure of the TPV apparatus according to the present invention;
figure 4 represents schematically a detail of a first preferred embodiment of the TPV apparatus according to the present invention;
figure 5 represents schematically a full view of the mentioned first preferred embodiment of TPV apparatus according to the present invention;
figure 6 represents schematically a detail of a second preferred embodiment of the TPV apparatus according to the present invention;
figure 7 represents schematically a full view of the mentioned second preferred embodiment of the TPV apparatus according to the present invention.

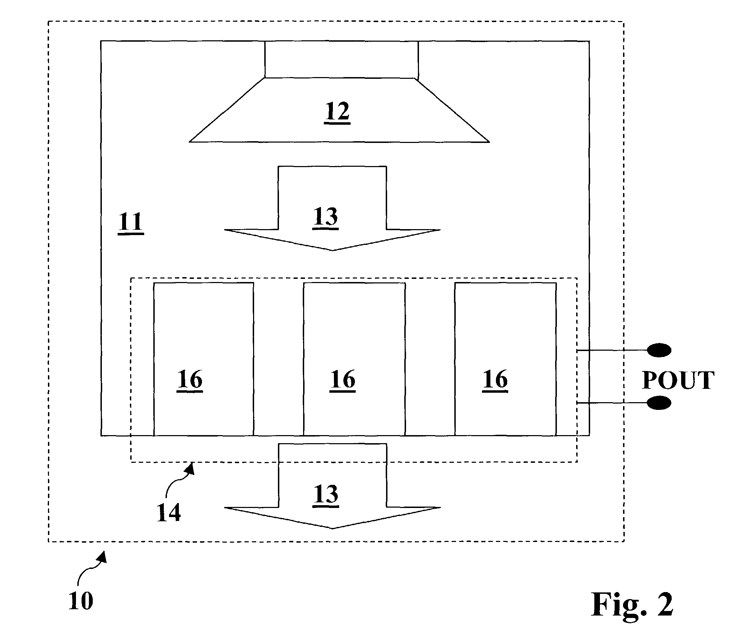

Referring to figure 2, the TPV apparatus according to the present invention (globally indicated by dotted box 10) comprises a combustion chamber 11. The combustion chamber 11 comprises a burner device 12, which generates by means of the combustion of fuel and combustion air (not illustrated) hot gases 13 that provide an amount of thermal power.

The TPV apparatus 10 comprises also a converter assembly (globally indicated by the dotted box 14), which is associated to the combustion chamber 11. The converter assembly 14 converts at least a portion of the amount of thermal power, which is provided by the hot gases 13, into the electric power POUT. The converter assembly 14 comprises a plurality of TPV modules 16 that are positioned internally to the combustion chamber 11.

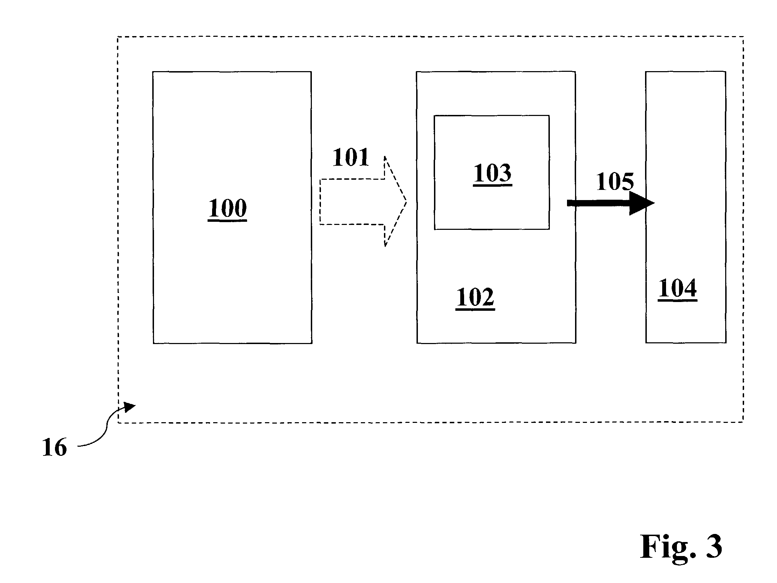

Referring to figure 3, a TPV module 16 comprises an emitter element 100, which emits an IR radiation 101, when heated by the hot gases 13. A TPV module 16 also comprises a receiver element 102, which comprises a plurality of TPV cells 103 for converting into electric power at least a portion of the IR radiation 101 provided the emitter element 100.

Advantageously, a TPV module 16 may also comprise also a cooling system 104, which is associated to the receiver element 102. In this manner, the operating temperature of the mentioned plurality of TPV cells 103 is kept within a predefined temperature range, due to the fact that the cooling system 104 eliminate the heat in excess 105.

Each of the TPV modules 16 provides a predefined amount of electric power, which can be indicated as POUTᵢ. The TPV modules 16 can easily be connected electrically so as to obtain that POUT = Σ POUTᵢ. It appears evident that the amount of electric power, which is generated by the TPV apparatus according to the present invention, depends on the number of TPV modules that are included in the combustion chamber 11. Therefore, it is possible to generate amounts of electric power that are quite higher than 1 KWe, just connecting electrically a suitable number of TPV modules. The amount of electric power POUTᵢ, which is generated by a single TPV module can be lower than 1 KWe. In this manner, the limitations that are due to the operation temperature and the size of the emitter element can be overcome.

Moreover, the temperature of the emitter element 100 of each of the TPV can be higher and more uniform.

In practice, the TPV apparatus, according to the present invention, adopts a converter assembly 14, which is characterised by a modular structure, associated to a single heat source (i.e. the burner element 12). This fact allows generating consistent amounts of electric power, without incurring into the drawbacks that are proper of the TPV apparatuses of the state of the art.

Various embodiments of the TPV apparatus, according to the present invention, can be provided. These embodiments can provide also for different configurations of the TPV modules.

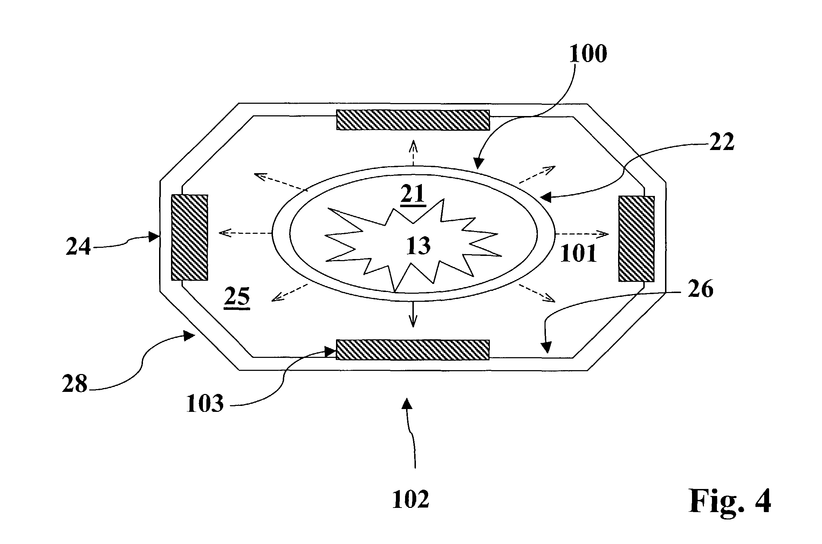

Referring to figure 4, according to a first preferred embodiment of the present invention, the emitter element 100 comprises at least a first through cavity 21, in which the hot gases 13 are allowed to flow. The emitter element 100 is therefore heated because of the flow of the hot gases 13. The emitter element 100 comprises also at least an external wall 22, which, in consequence of the heating of emitter element 100, emits an IR radiation 101. According to the same embodiment the receiver element 102 comprises a second through cavity 25, in which the emitter element 100 is positioned. The internal wall 26 of the second through cavity 25 supports a plurality of TPV cells (hatched box 103) that are positioned so as to receive the IR radiation 101.

The second through cavity 25 can be sealed so as to obtain a vacuum atmosphere inside the cavity or an atmosphere filled with a noble gas (e.g Helium).

The TPV cells are preferably low band-gap semiconductor cells and can be fabricated, according to the state of the art technologies, using direct band-gap semiconductor materials such those included groups III-V (for example GaAs, GaSb, InGaSb, InGaAsSb and the like).

The emitter element 100 can advantageously comprise layers of high emissivity material such as, for example, SiC or Kanthal.

Preferably, the receiver element 102 comprises at least an external wall 28, which exchanges heat with a cooling fluid (not illustrated). The cooling fluid is advantageously supplied by the cooling system 104 of figure 3.

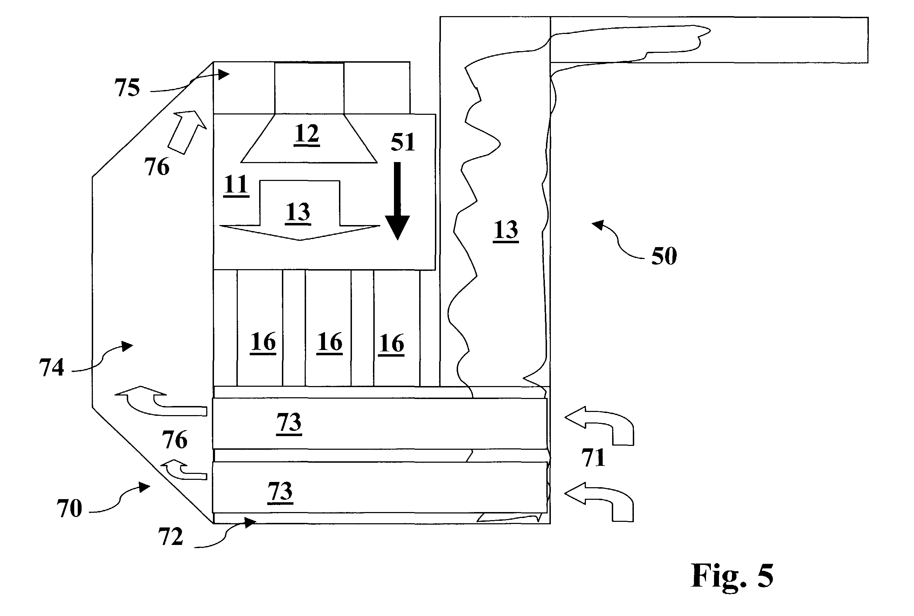

In figure 5, a schematic view of this first preferred embodiment of the present invention, is illustrated. The TPV apparatus, globally indicated by the reference 50 of figure 5, is provided with TPV modules 16 positioned along a direction (arrow 51), which is substantially parallel to the main flow direction of the hot gases 13. This allows advantageously the flow of the hot gases 13 into the first through cavity 21 of the emitter element of each of the modules 16.

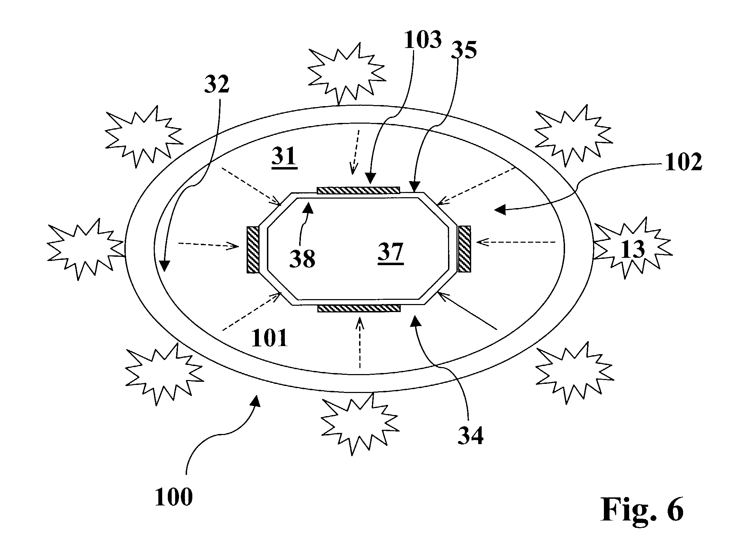

Referring to figure 6, according to a second preferred embodiment of the present invention, the emitter element 100 comprises is exposed to the flow of hot gases 13, so as to be heated. The emitter element 100 comprises a third through cavity 31. At least an internal wall 32 of the third through cavity 31 emits an IR radiation 101, when the emitter element 100 is heated by the hot gases 13. The third through cavity 31 can be sealed so as to obtain a vacuum atmosphere inside the cavity or an atmosphere filled with a noble gas (e.g Helium).

According to the same embodiment, the mentioned receiver element 102 is positioned inside the third through cavity 31, so as to be surrounded by the emitter element 100. At least an external wall 35 of the receiver element 102 supports a plurality of TPV cells (hatched box 102) that are positioned, so as to receive the IR radiation 101.

The receiver element 102 comprises advantageously a fourth through cavity 37, through which a cooling fluid (not illustrated) can flow and exchange heat with at least an internal wall 38 of the fourth cavity 37. The cooling fluid can be supplied by the cooling system 104 of figure 3.

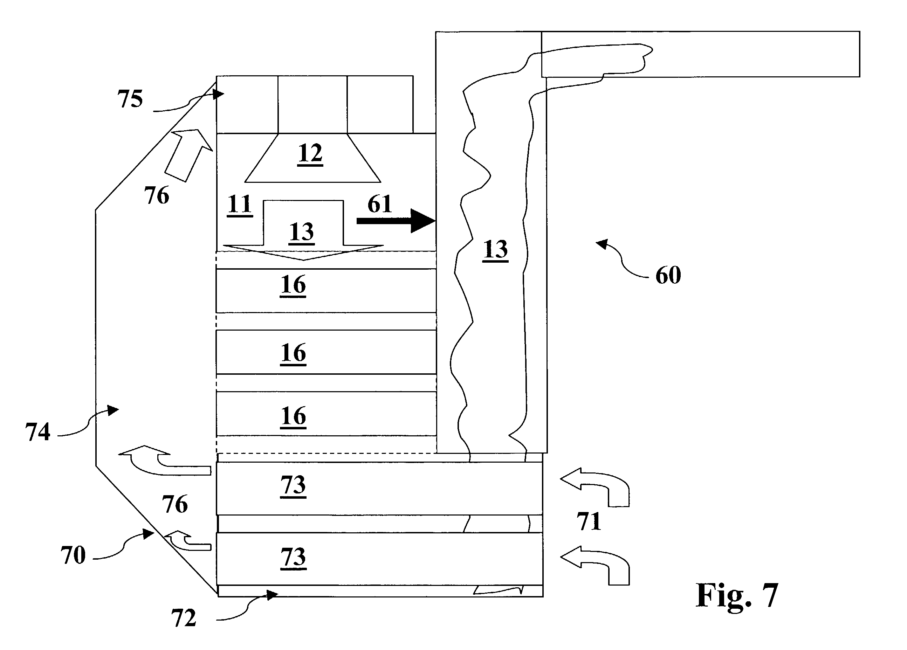

In figure 7, a schematic view of this second preferred embodiment of the present invention, is illustrated. The TPV apparatus, globally indicated by the reference 60, is provided with TPV modules 16 positioned along a direction (arrow 61), which is substantially perpendicular to the main flow direction of the hot gases 13. Advantageously, the modules 16 are disposed according to a staggered or inline distribution with respect of the main flow direction of the hot gases 13. In this manner, the third body 30 of the emitter element of the modules 16 can exposed to the flow of hot gases 13, according to the needs.

Referring now to figures 5 and 7, the TPV apparatus, according to the present invention, comprises preferably a recuperator assembly 70. The recuperator assembly 70 can pre-heat, by means of the residual heat of the hot gases 13, the combustion air 71. Preferably, the recuperator assembly 70 comprises at least a recuperating chamber 72, which is coupled to the combustion chamber 11, so as to receive the hot gases 13 flowing through it. The recuperating chamber comprises a plurality of heat exchanger tubes 73. The combustion air 71 flows internally to the heat exchanger tubes 73, so as to be pre-heated. Advantageously, the plurality of heat exchanger tubes 73, is coupled to a duct 74, which conveys the air 71 to a mixer device 75. The mixer device 75 provides the burner device 12 with the pre-heated air 76, after having mixed it with a predefined amount of fuel.

Alternatively, the duct 74 can convey the pre-heated combustion air 76 directly to the burner device 12.

This embodiment of the present invention, is particularly advantageous because it allows improving the total efficiency conversion of the TPV apparatus.

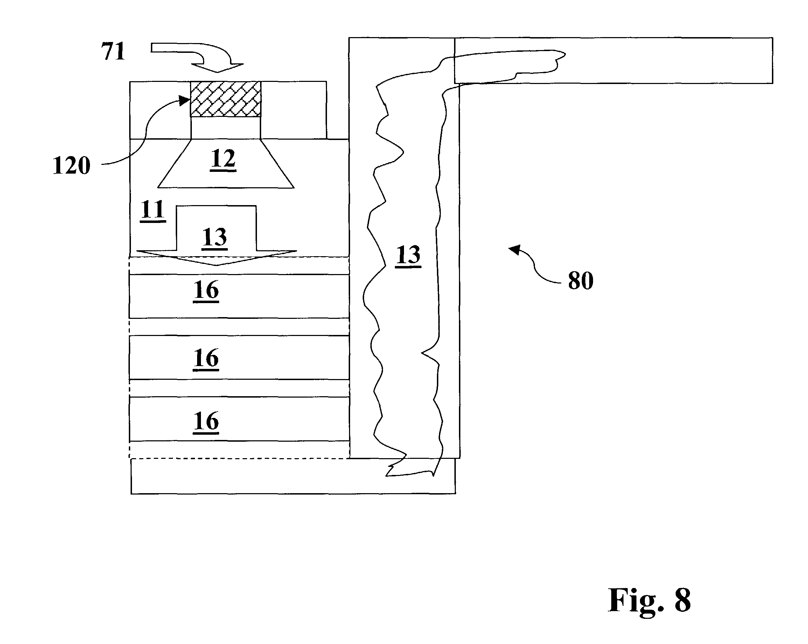

Another manner for obtaining a conversion efficiency improvement can be achieved adopting the embodiment of the present invention, which is illustrated in figure 8. According to this embodiment of the present invention, the burner device 12 of the TPV apparatus 80 is provided advantageously with an auto-recuperative system 120 for directly pre-heating the combustion air 71. Therefore, as illustrated in figure 8, the structure of the TPV apparatus 80, according to the present invention, can be remarkably simplified.

Alternatively, the burner device 12 can comprise an auto-regenerative burner, such one of those generally used in industrial kiln-drying systems. In this manner, the total efficiency of the TPV apparatus 80, according to the present invention, can be further increased till to remarkable levels (higher than the 20%).

Moreover, the burner device 12 can comprise a burner of the flame-type or, more advantageously, of the flame-less type, so as to reduce the NOx emissions of the TPV apparatus 20.

It has been proved in practice that the TPV apparatus, according to the present invention, allows achieving all the intended aims and objects.

Thanks to the modular approach in the management of the TPV generation of the output electric power, the TPV apparatus has proven to be particularly suitable for the use in distributed generation systems characterised by power levels higher than 1 KWe. By means of the use of a single combustion chamber including a plurality of TPV modules, the TPV apparatus, according to the present invention, has proven to be able to generate relatively high amounts of electric power keeping relatively low, at the same time, the installation and the operation costs. Moreover, the total efficiency of the TPV apparatus, according to the present invention, has proven to be relatively high, if compared to the TPV apparatuses of the state of the art.

These facts make the TPV apparatus, according to the present invention, particularly suitable for the use in DG, CHP and CHCP systems, characterised by electric power levels higher than 1 KWe.

Moreover, the fabrication of the TPV apparatus, according to the present invention, has proven to be relatively easy and at low costs, due to the fact that relatively simple configurations can be adopted for the described TPV modules.

The TPV apparatus, according to the present invention, thus conceived is susceptible of numerous modifications and variations, all of which are within the scope of the inventive concept. All the details may also be replaced with other technically equivalent elements. In practice, the materials employed, so long as they are compatible with the specific use, as well as the dimensions, may be any according to the requirements and to the state of the art.

## Claims

1. A TPV apparatus for generating electric power comprising:
- a combustion chamber comprising a burner device, said burner device generating, by means of the combustion of fuel and combustion air, hot gases providing an amount of thermal power;
- a converter assembly, said converted assembly being associated to said combustion chamber and converting into electric power at least a portion of said amount of thermal power;
**characterised in that**, said converter assembly comprises a plurality of TPV modules, positioned internally to said combustion chamber, one or more of said TPV modules comprising at least:
- an emitter element, said emitter element emitting IR radiation, when heated by said hot gases generated by said burner device; and
- a receiver element, said receiver element comprising a plurality of TPV cells for converting into electric power at least a portion the IR radiation, which is provided by said emitter element.

2. A TPV apparatus, according to claim 1, **characterised in that**, it generates an amount of electric power, which is higher than 1 KWe.

3. A TPV apparatus, according to one or more of the previous claims, **characterised in that**, one or more of said thermophotovoltaic modules comprises a cooling system, said cooling system being associated to said receiver element, so as to maintain the operating temperature of said plurality of TPV cells within a predefined temperature range.

4. A TPV apparatus, according to one or more of the claims from 1 to 3, **characterised in that**, said emitter element comprises:
- at least a first through cavity, into which said hot gases are allowed to flow, so as to heat said first body;
- at least an external wall, which, in consequence of the heating of said first body, emits an IR radiation.

5. A TPV apparatus, according to the claims 3 and 4, **characterised in that**, said receiver element comprises a second through cavity, in which said emitter element is positioned, the internal wall of said second through cavity supporting said plurality of TPV cells, said plurality of TPV cells being positioned, so as to receive the IR radiation, which is emitted by the external wall of said emitter element.

6. A TPV apparatus, according to the claim 5, **characterised in that**, said receiver element comprises at least an external wall, which exchanges heat with a cooling fluid, said cooling fluid being supplied by said cooling system, so as to maintain said the operating temperature of said plurality of TPV cells within a predefined range.

7. A TPV apparatus, according to one or more of the claims from 1 to 3, **characterised in that**, said emitter element comprises is exposed to the flow of said hot gases so as to be heated by said hot gases and comprises a third through cavity, at least an internal wall of said third through cavity emitting an IR radiation, when said emitter element is heated by said hot gases.

8. A TPV apparatus, according to the claim 7, **characterised in that**, said receiver element is positioned inside said third through cavity, so as to be surrounded by said emitter element, the external wall of said receiver element supporting said plurality of TPV cells, said plurality of TPV cells being positioned, so as to receive the IR radiation emitted by the internal wall of said third through cavity.

9. An TPV apparatus, according to claim 8, **characterised in that**, said receiver element comprises a fourth through cavity, into which a cooling fluid flows and exchanges heat with the internal wall of said fourth through cavity, said cooling fluid being supplied by said cooling system, so as to maintain said the operating temperature of said plurality of TPV cells within a predefined range.

10. A TPV apparatus, according to the claim 5 **characterised in that** said second through cavity comprises a vacuum atmosphere or an atmosphere filled with a noble gas.

11. A TPV apparatus, according to the claim 7 **characterised in that** said third through cavity comprises a vacuum atmosphere or an atmosphere filled with a noble gas.

12. A TPV apparatus, according to one or more of the claims from 4 to 6, **characterised in that**, said TPV modules are positioned along a direction, which is substantially parallel to the main flow direction of said hot gases.

13. A TPV apparatus, according to one or more of the claims from 7 to 9, **characterised in that**, said TPV modules are positioned along a direction, which is substantially perpendicular to the main flow direction of said hot gases.

14. A TPV apparatus, according to the claim 13, **characterised in that**, said TPV modules are disposed according to a staggered distribution with respect of the main flow direction of said hot gases.

15. A TPV apparatus, according to the claim 13, **characterised in that**, said TPV modules are disposed according to a inline distribution with respect of the main flow direction of said hot gases.

16. A TPV apparatus, according to one or more of the previous claims, **characterised in that**, said plurality of TPV cells comprises one or more low band-gap TPV cells.

17. A TPV apparatus, according to one or more of the previous claims, **characterised in that** it comprises a recuperator assembly for pre-heating, by means of the residual heat of said hot gases, said combustion air.

18. A TPV apparatus, according to the claim 17, **characterised in that** said recuperator assembly comprises at least a recuperative chamber, said recuperative chamber being associated to said combustion chamber, so as to receive the hot gases flowing through said combustion chamber.

19. A TPV apparatus, according to the claim 18, **characterised in that**, said recuperative chamber comprises a plurality of heat exchanger tubes into which said combustion air is allowed flow, so as to be pre-heated.

20. A TPV apparatus, according to the claim 19, **characterised in that**, said plurality of heat exchanger tubes, is coupled to a duct, which conveys the pre-heated combustion air to a mixer device, said mixer device providing said burner device with said pre-heated combustion air.

21. A TPV apparatus, according to the claim 19, **characterised in that**, said plurality of heat exchanger tubes, is coupled to a duct, which conveys the pre-heated combustion air to said burner device.

22. A TPV apparatus, according to one or more of the claims from 1 to 21, **characterised in that**, said burner device burner is provided with a heat auto-recuperative system.

23. A TPV apparatus, according to one or more of the claims from 1 to 21, **characterised in that**, said burner device burner comprises an auto-regenerative burner.

24. A TPV apparatus, according to one or more of the previous claims, **characterised in that**, said burner device burner comprises a burner of the flame-type.

25. A TPV apparatus, according to one or more of the claims from 1 to 23, **characterised in that**, said burner device burner comprises a burner of the flameless-type.

26. A DG system, **characterised in that** it comprises at least a TPV apparatus, according to one or more of the previous claims.

27. A CHP system, **characterised in that** it comprises at least a TPV apparatus, according to one or more of the previous claims.

28. A CHCP system, **characterised in that** it comprises at least a TPV apparatus, according to one or more of the previous claims.
